# EUROPÄISCHE PATENTANMELDUNG

(11) **EP 4 008 891 A2**
(43) Veröffentlichungstag der Anmeldung: **08.06.2022**
(21) Anmeldenummer: 21211552.1
(22) Anmeldetag: 01.12.2021
(51) Int. Cl.: F02G 5/02, F02B 73/00

(54) **BLOCKHEIZKRAFTWERK UND ABSPERRORGAN FÜR EIN BLOCKHEIZKRAFTWERK**

(30) Priorität: 01.12.2020 DE 102020215120
(71) Anmelder: Langlechner GmbH & Co. KG, 84579 Unterneukirchen (DE)
(72) Erfinder: Langlechner, Richard, 84579 Unterneukirchen (DE)
(74) Vertreter: Dr. Weitzel & Partner

(57) **Zusammenfassung**

Die Erfindung betrifft Blockheizkraftwerk mit einer Vielzahl von Verbrennungsmotoren, die jeweils einen Abgasstrom erzeugen;
mit wenigstens einem Abgaswärmetauscher, der mit den Abgasströmen der Verbrennungsmotoren beaufschlagt ist, um Wärmeenergie aus den Abgasströmen abzuführen, wobei
die Abgasströme in Strömungsrichtung des Abgases von den Verbrennungsmotoren durch separate Abgaswärmetauscher und/oder zu einem gemeinsamen Abgaswärmetauscher zunächst in separaten Abgasleitungen und anschließend in einer gemeinsamen Abgasleitung geführt werden und zwischen den separaten Abgasleitungen und der gemeinsamen Abgasleitung ein Abgassammler vorgesehen ist.

Das erfindungsgemäße Blockheizkraftwerk ist dadurch gekennzeichnet, dass in den separaten Abgasleitungen jeweils ein gasdichtes, separat betätigbares Absperrorgan angeordnet ist; wobei
das Blockheizkraftwerk ferner einen geschlossenen Dampfkreislauf umfasst, in welchem der wenigstens eine Abgaswärmetauscher als Verdampfer zusammen mit einem Dampfmotor, einem Kondensator und einer Speisepumpe angeordnet ist, um die aus den Abgasströmen abgeführte Wärmeenergie in Antriebsleistung umzuwandeln.

## Beschreibung

Die vorliegende Erfindung betrifft ein Blockheizkraftwerk mit einer Vielzahl von Verbrennungsmotoren, die jeweils einen Abgasstrom erzeugen, gemäß dem Oberbegriff von Anspruch 1 und ein Absperrorgan für ein Blockheizkraftwerk gemäß dem Oberbegriff von Anspruch 8.

Mit Blockheizkraftwerken können Wärmeenergie und elektrische Energie kombiniert zur Verfügung gestellt werden. Hierfür weisen die Blockheizkraftwerke einen Verbrennungsmotor auf, der als Brennstoff beispielsweise Diesel, Pflanzenöl oder auch ein Gas benötigt. Die vorliegende Erfindung betrifft insbesondere Blockheizkraftwerke, deren Verbrennungsmotoren mit Biogas betrieben werden.

Herkömmlich wird die in Blockheizkraftwerken gewonnene elektrische Energie zur Grundlastversorgung in elektrischen Netzen herangezogen. Das bedeutet, dass der Verbrennungsmotor oder die Verbrennungsmotoren eines Blockheizkraftwerkes dauerhaft in ihrem Nennbetrieb betrieben werden und dabei eine konstante elektrische Energie bereitstellen. Solche Grundlastblockheizkraftwerke müssen vollständig vom Netz genommen werden, wenn die von ihnen erzeugte elektrische Energie vorübergehend nicht in vollem Umfang benötigt wird. In jüngerer Zeit wurden Blockheizkraftwerke daher flexibilisiert, was bedeutet, dass von mehreren im Blockheizkraftwerk vorgesehenen Verbrennungsmotoren einzelne abgeschaltet werden können, um dadurch die zur Verfügung gestellte elektrische Energie zu reduzieren. Jeder einzelne Verbrennungsmotor in einem Blockheizkraftwerk kann somit weiterhin auf einen Nennbetriebszustand optimiert ausgelegt werden und entweder abgeschaltet oder im Nennbetrieb betrieben werden. Die Anpassung der abgegebenen elektrischen Energie des Blockheizkraftwerkes erfolgt also durch Ab- und Zuschalten einzelner Verbrennungsmotoren. Solche Blockheizkraftwerke mit mehreren Verbrennungsmotoren werden in der Praxis auch als Blockheizkraftwerksanlage oder BHKW-Anlage bezeichnet, und die jeweils einen Verbrennungsmotor aufweisenden Anlagenteile werden als Blockheizkraftwerk (BHKW) bezeichnet. Der Einfachheit halber wird vorliegend eine solche BHKW-Anlage als Blockheizkraftwerk mit mehreren Verbrennungsmotoren bezeichnet. Alternativ könnte also auch der Begriff Blockheizkraftwerksanlage oder BHKW-Anlage verwendet werden.

Um mit einem Blockheizkraftwerk einen vergleichsweise größeren Anteil elektrischer Energie ohne Verbrauch von zusätzlichem Brennstoff zur Verfügung zu stellen, wurde ferner vorgeschlagen, Blockheizkraftwerke mit einem sekundären Dampfkreislauf zu ergänzen, in dem neben einer Speisepumpe, einem Verdampfer und einem Kondensator ein Dampfmotor angeordnet ist, der einen elektrischen Generator antreibt. Der Dampferzeuger wird mit Wärmeenergie aus dem Abgasstrom des Verbrennungsmotors betrieben und daher vorliegend auch als Abgaswärmetauscher bezeichnet. Ein Beispiel eines solchen Blockheizkraftwerks wird in WO 2012/107177 A1 offenbart. Dieses Blockheizkraftwerk weist jedoch einen einzigen Verbrennungsmotor auf, sodass keine Flexibilisierung vorgesehen ist.

In flexibilisierten Blockheizkraftwerken hat man in der Praxis festgestellt, dass die Lebensdauer der Verbrennungsmotoren im Vergleich zu Blockheizkraftwerken ohne Flexibilisierung reduziert ist. Dieses Phänomen ist insofern ungewöhnlich, dass, wie dargestellt, auch bei flexibilisierten Blockheizkraftwerken die Verbrennungsmotoren jeweils in ihrem Nennbetriebspunkt betrieben werden können und allein ein möglicherweise vergleichsweise häufigeres Ausschalten einzelner Verbrennungsmotoren keine plausible Begründung für die verkürzte Lebensdauer darstellte.

US 2005/0115241 A1 offenbart ein Miniblockheizkraftwerk, wie es in Wohnhäusern zum Einsatz gelangen kann. Es ist eine Vielzahl von Verbrennungsmotoren vorgesehen, die jeweils einen Abgasstrom erzeugen, wobei Abgaswärme über einen Abgaswärmetauscher aus den Abgasströmen abgeführt wird und zur Heißwasserversorgung herangezogen wird. Solche Miniblockheizkraftwerke werden aufgrund ihrer geringen Leistung nicht zur Stromversorgung von öffentlichen Stromnetzen herangezogen. Die aus US 2005/0115241 A1 bekannten Merkmale sind im Oberbegriff des Anspruchs 1 zusammengefasst.

DE 44 18 652 A1 offenbart ein Absperrventil zur Einfügung in einen Strömungsweg, durch welches vorzugsweise ein Kohlenwasserstoffgas aus einer thermischen Zerlegung oder ein Auspuffgas geführt wird, mit Ventilkörpersitzen, die von Halterungen und Abstandshaltern in einem Dichtkörper fixiert sind, wobei sie passend in eine Dichtnut eingreifen.

Zum weiteren Stand der Technik wird verwiesen auf FR 2 830 599 A1 und DE 37 00 536 A1.

Der vorliegenden Erfindung liegt die Aufgabe zugrunde, ein flexibilisiertes Blockheizkraftwerk anzugeben, bei welchem die Lebensdauer der Verbrennungsmotoren gegenüber einem nicht flexibilisiertem Blockheizkraftwerk nicht verkürzt ist.

Die erfindungsgemäße Aufgabe wird durch ein Blockheizkraftwerk mit den Merkmalen von Anspruch 1 gelöst. Ferner wird in Anspruch 8 ein Absperrorgan für ein Blockheizkraftwerk zur Lösung dieser Aufgabe angegeben. Die weiteren abhängigen Ansprüche beschreiben vorteilhafte und besonders zweckmäßige Ausgestaltungen der Erfindung.

Der Erfindung liegt die Erkenntnis zugrunde, dass bei Blockheizkraftwerken mit einer Vielzahl von Verbrennungsmotoren, die einzeln abschaltbar sind und deren Abgasströme einem gemeinsamen Abgaswärmetauscher zugeführt werden oder aus einem anderen Grund, zum Beispiel zur Abgasnachbehandlung und/oder Schalldämpfung in einer gemeinsamen Abgasleitung vereint werden, besonders jene Verbrennungsmotoren eine vergleichsweise verkürzte Lebensdauer aufweisen, die eine vergleichsweise lange Stillstandzeit im abgeschalteten Zustand aufwiesen. Dabei zeigten die Zylinderwände der Verbrennungsmotoren, die als Kolbenmotor ausgeführt waren, übermäßige Verschleißerscheinungen. Zudem zeigte auch das Schmieröl nach einer längeren Betriebszeit eine verminderte Qualität und selbst Edelstahlbauteile, die mit dem Abgasstrom in Berührung kamen, wiesen eine angegriffene Oberfläche auf.

Hieraus leitet sich die Erkenntnis ab, dass in den abgasführenden Bereichen Schwefelsäure gebildet wurde, die die Oberflächen der abgasführenden Bauteile angreift und einen Ölsumpf, beispielsweise im Verbrennungsmotor, verunreinigt. Solche Schwefelsäure entsteht, wenn im Abgasstrom beziehungsweise an der abgasführenden Oberfläche der Taupunkt unterschritten wird. Somit basiert das eingangs genannte Problem darauf, dass heißes Abgas mit kalten Bauteilen in Berührung kommt, wodurch die Taupunktunterschreitung und damit die Entstehung von Schwefelsäure eintritt. Die Berührung von kalten Bauteilen mit dem heißen Abgasstrom tritt bei einer Rückströmung des Abgasstromes eines in Betrieb befindlichen Verbrennungsmotors in die Abgasleitung eines nicht im Betrieb befindlichen und damit kalten Verbrennungsmotors auf. Die Rückströmung kann dabei bis in den oder die Zylinder des nicht im Betrieb befindlichen Verbrennungsmotors auftreten und somit dessen Zylinderwände durch Bildung von Schwefelsäure schädigen. Gemäß der vorliegenden Erfindung wird daher eine solche Rückströmung unterbunden.

Bei einer ersten Alternative eines erfindungsgemäßen Blockheizkraftwerks mit einer Vielzahl von Verbrennungsmotoren, die jeweils einen eigenen Abgasstrom erzeugen, wobei wenigstens ein Abgaswärmetauscher vorgesehen ist, der mit den Abgasströmen der verschiedenen Verbrennungsmotoren beaufschlagbar ist, um Wärmeenergie aus den Abgasströmen abzuführen, wobei die Abgasströme in Strömungsrichtung des Abgases von den Verbrennungsmotoren durch separate Abgaswärmetauscher und/oder zu einem gemeinsamen Abgaswärmetauscher zunächst in separaten Abgasleitungen und anschließend in einer gemeinsamen Abgasleitung geführt werden und zwischen den separaten Abgasleitungen und der gemeinsamen Abgasleitung ein Abgassammler vorgesehen ist, ist in den separaten Abgasleitungen jeweils ein gasdichtes, separat betätigbares Absperrorgan angeordnet, welches eine Rückströmung von heißem Abgas in die kalten separaten Abgasleitungen unterbindet.

Es ist ferner ein geschlossener Dampfkreislauf vorgesehen, in welchem der wenigstens eine Abgaswärmetauscher als Verdampfer zusammen mit einem Dampfmotor, einem Kondensator und einer Speisepumpe angeordnet ist, um die aus den Abgasströmen abgeführte Wärmeenergie in Antriebsleistung umzuwandeln.

Bei einer alternativen Ausgestaltung der Erfindung kann im Abgassammler ein Umschaltventil vorgesehen sein, mit welchem eine abgasleitende Verbindung zu den separaten Abgasleitungen einzeln gasdicht absperrbar ist, um so die Rückströmung von heißem Abgas in die kalten separaten Abgasleitungen zu unterbinden. In der Regel werden entweder die Absperrorgane oder das Umschaltventil vorgesehen. Prinzipiell sind beide Maßnahmen jedoch auch miteinander kombinierbar, um eine besonders dichte Absperrung zu erzielen.

Die Verbrennungsmotoren sind bevorzugt einzeln abschaltbar und zuschaltbar, um die genannte Flexibilisierung des Blockheizkraftwerks zu erreichen.

Bevorzugt umfasst das erfindungsgemäße Blockheizkraftwerk auch bei der alternativen Ausgestaltung einen geschlossen Dampfkreislauf, in welchem der wenigstens eine Abgaswärmetauscher als Verdampfer zusammen mit einem Dampfmotor, einem Kondensator und einer Speisepumpe angeordnet ist, um die aus den Abgasströmen abgeführte Wärmeenergie in Antriebsleistung umzuwandeln. Der Dampfmotor kann insbesondere einen elektrischen Generator antreiben, um Strom zu erzeugen. Bei dem elektrischen Generator kann es sich um einen separaten Generator handeln oder um einen Generator, der auch mit wenigstens einem oder allen Verbrennungsmotoren angetrieben wird.

Das erfindungsgemäße Blockheizkraftwerk kann vorteilhaft zur Einspeisung elektrischer Energie in ein öffentliches Stromnetz verwendet werden, insbesondere zur Grundlastversorgung. Gerade hierbei ist die zusätzliche Energiegewinnung mit dem Dampfkreislauf effektiv.

Der Dampfkreislauf ist insbesondere der einzige Dampfkreislauf, das bedeutet insbesondere, dass alle Abgasströme der Verbrennungsmotoren, im eingeschalteten Zustand der Verbrennungsmotoren, gemeinsam Abgaswärme für den Dampfkreislauf zur Verfügung stellen. Selbstverständlich ist es aber nicht zwingend, die Abgaswärme aller Abgasströme zur Dampferzeugung heranzuziehen. Beispielsweise können auch einzelne Abgasströme ausschließlich zur Nutzwärmeerzeugung herangezogen werden.

Prinzipiell kann/können der Abgassammler und insbesondere ein Teilabschnitt der separaten Abgasleitungen im Abgaswärmetauscher vor einer Wärmeaustauschfläche angeordnet sein. In der Regel wird der Abgassammler, bei dem es sich um eine einfache Verbindung von Rohrleitungen handeln kann, jedoch außerhalb des Abgaswärmetauschers angeordnet sein.

Um zu verhindern, dass heißes Abgas in einen ausgekühlten Abschnitt einer separaten Abgasleitung gelangt, sind die Absperrorgane, die beispielsweise als Abgasschieber ausgeführt sein können, bevorzugt möglichst dicht vor dem Abgassammler positioniert, insbesondere in einem letzten Drittel oder einem letzten Fünftel der separaten Abgasleitungen oder unmittelbar vor dem Abgassammler, jeweils betrachtet in Strömungsrichtung des Abgases vom Verbrennungsmotor zum Abgaswärmetauscher beziehungsweise zum Abgassammler.

Ein erfindungsgemäßes Absperrorgan für eine Gasleitung, insbesondere für ein Blockheizkraftwerk, weist einen manuellen oder bevorzugt automatisierten Antrieb auf, ferner einen vom Antrieb reziprok zwischen einer Schließstellung und einer Öffnungsstellung bewegbaren Schieber.

Erfindungsgemäß sind zwei einteilige oder mehrteilige Abstandshalter vorgesehen, die den Schieber zwischen sich einschließen und in seiner linearen Bewegung führen, wobei die Schieber zusammen mit den Abstandshaltern gasdicht zwischen zwei Rohrleitungsflanschen einsetzbar oder eingesetzt sind. Die Abstandshalter schließen den Schieber in einer Richtung senkrecht oder schräg, das heißt nicht parallel, zur Durchströmungsrichtung des Absperrorgans ein.

Gemäß einer Ausführungsform werden die Abstandshalter mit einer elastischen Verspannung zwischen den Rohrleitungsflanschen eingesetzt. Gemäß einer anderen Ausführungsform werden die Abstandshalter zwischen den Rohrleitungsflanschen fest verspannt, beispielsweise durch Anziehen einer Flanschverschraubung.

Die Rohrleitungsflansche sind insbesondere in den genannten separaten Abgasleitungen vorgesehen und miteinander verschraubt, sodass je separater Abgasleitung wenigstens ein Paar von Rohrleitungsflanschen vorgesehen ist. Die Absperrorgane können jeweils zwischen den beiden Rohrleitungsflanschen eingesetzt sein.

Gemäß einer Ausführungsform werden die Abstandshalter zusammen mit dem Schieber unmittelbar zwischen die Rohrleitungsflansche der bestehenden Abgasleitungen eingesetzt, sodass kein zusätzlicher Rohrleitungsflansch bei der Montage des Absperrorgans vorgesehen wird. Gemäß einer alternativen Ausführungsform schließt sich in der Axialrichtung, das heißt Durchströmungsrichtung, einseitig oder beidseitig an den Rohrleitungsflanschen, welche die Abstandshalter und den Schieber unmittelbar zwischen sich einschließen, ein Rohrstück mit einem weiteren Rohrleitungsflansch an, der an einen bestehenden Rohrleitungsflansch der Abgasleitung angeschlossen werden kann. Das Rohrstück kann dann weitere Funktionen aufweisen, insbesondere als Kompensator, ausgeführt sein, der einen axialen und/oder radialen Versatz zwischen den Rohrleitungsflanschen der Abgasleitung, das heißt dem Anschlussende des Absperrorgans überbrückt, um entsprechende Spannungen zwischen den die Abstandshalter und den Schieber einschließenden Rohrleitungsflanschen fernzuhalten. Ein solcher Versatz kann beispielsweise durch thermische Dehnungen auftreten.

Der Kompensator kann zum Beispiel einen Faltenbalg, insbesondere aus Metall, oder eine andere Einrichtung umfassen, die eine mechanische Verformung im Betrieb ermöglicht.

Bevorzugt weist der Schieber eine Durchgangsöffnung auf, die in der Öffnungsstellung mit einem Rohrleitungsquerschnitt, der den Strömungsquerschnitt ausbildet, der Rohrleitungsflansche in Überdeckung bringbar ist, um somit einen im Wesentlichen ungehinderten Strömungsquerschnitt zwischen den Rohrleitungsflanschen zur Verfügung zu stellen.

Bevorzugt weisen die Abstandhalter eine Dicke auf, welche einer Dicke des Schiebers entspricht, oder welche besonders bevorzugt sogar kleiner ist als die Dicke des Schiebers ist, um eine sichere gasdichte Abdichtung zwischen den Stirnseiten der Rohrleitungsflansche und dem Schieber, das heißt gegen dessen flächige Seiten, herzustellen. Beispielsweise ist die Dicke der Abstandhalter um maximal ein Zehntel oder maximal ein Zwanzigstel kleiner als die Dicke des Schiebers. Wenn beispielsweise der Schieber eine Dicke von 10 mm hat, so können die Abstandshalter eine Dicke von 9 mm oder von 9,5 mm aufweisen.

Dadurch ist eine leichte Abdichtung der zwischen den Rohrleitungsflanschen eingespannten Absperrorganen möglich.

Gemäß einer alternativen Ausführungsform weisen die Abstandhalter eine Dicke auf, die größer als die Dicke des Schiebers ist, um ein besonders leichtes Gleiten des Schiebers zu ermöglichen. Der Schieber wird dann bevorzugt mit wenigstens einem elastischen Dichtelement oder wenigstens einem elastisch gelagerten Dichtelement auf einer Axialseite oder auf beiden Axialseiten des Schiebers beziehungsweise des Absperrorgans gegen den entsprechenden Rohrleitungsflansch gasdicht abgedichtet.

Beispielsweise ist ein Dichtelement in Form eines in der Axialrichtung elastisch im Rohrflansch, insbesondere einer randoffenen Umfangsnut (oder Axialnut) des Rohrflansches, gelagerten Dichtelements vorgesehen, das in der Durchströmungsrichtung oder entgegen der Durchströmungsrichtung elastisch gegen den Schieber gedrückt wird.

Die erfindungsgemäßen Absperrorgane können auch besonders leicht bei bestehenden Blockheizkraftwerken nachgerüstet werden, indem dort vorhandene miteinander verschraubte Rohrleitungsflansche demontiert werden, die Absperrorgane zwischen die beiden Rohrleitungsflansche eines Paares von Rohrleitungsflanschen positioniert werden und die Rohrleitungsflansche anschließend wieder miteinander verschraubt werden, wobei sie die Absperrorgane zwischen sich einspannen.

Gemäß einer Ausführungsform bilden die Schieber und/oder die Abstandshalter mit wenigstens einem Rohrleitungsflansch oder beiden Rohrleitungsflanschen eine metallische Dichtung aus. Gemäß einer alternativen Ausführungsform sind elastisch verformbare oder plastisch verformbare Dichtelemente vorgesehen, beispielsweise in Form einer elastisch oder plastisch verformbaren Dichtschicht auf einer Oberfläche oder zwei entgegengesetzten Oberflächen des Schiebers und/oder der Abstandshalter.

Die Abstandhalter werden bevorzugt durch eine Verschraubung der Rohrleitungsflansche formschlüssig gehalten und weisen beispielsweise wenigstens eine Bohrung auf, durch welche eine Schraube der Flanschverschraubung gesteckt ist. Die Bohrung kann gegenüber dem Schieber randoffen sein, wobei die Schraube optional auch den Schieber führen kann.

Besonders bevorzugt ist wenigstens ein Halter vorgesehen, mit dem der Antrieb eines Absperrorgans an den Rohrleitungsflanschen anschließbar ist, insbesondere verschraubt werden kann. Der Halter kann besonders einfach stangenförmig sein, wobei die Stange an einem Ende eine Bohrung oder sonstige Öffnung aufweist, durch welche eine Schraube der Flanschverschraubung geschraubt ist, und am anderen Ende eine Befestigung, insbesondere ebenfalls wenigstens eine Bohrung/Öffnung, zur Montage des Antriebs aufweist.

Der Schieber ist insbesondere aus Blech hergestellt.

Als Antrieb kann insbesondere ein Linearmotor vorgesehen sein.

Der Anpressdruck zwischen den Flanschen und dem Schieber beziehungsweise zwischen den Flanschen und den Abstandshaltern kann über Druckfedern oder andere elastische Druckelemente erreicht werden, die in die Verschraubung der beiden Rohrleitungsflansche integriert werden.

Die Absperrorgane sind insbesondere temperaturbeständig bis 300° C oder 350° C oder mehr. Beispielsweise können die Rohrleitungsflansche mit den verspannten eingefügten Absperrorganen druckdicht bis zu einem Überdruck von 0,3 Millibar oder mehr sein.

Der Abgaswärmetauscher kann bevorzugt eine Leistung von maximal 250 bis 300 kW aufweisen. Sollte ein größerer Wärmestrom im Abgaswärmetauscher aus dem Abgas übertragen werden, so bietet sich der Einsatz mehrerer Abgaswärmetauscher an, die jeweils einzelnen Verbrennungsmotoren beziehungsweise Gruppen von Verbrennungsmotoren zugeordnet werden und in deren Abgasströmen positioniert sind. Dies ist jedoch nicht zwingend.

Die Erfindung soll nachfolgend anhand von Ausführungsbeispielen und den Figuren exemplarisch beschrieben werden.

Es zeigen:
- Figur 1: eine schematische Darstellung eines erfindungsgemäßen Blockheizkraftwerks;
- Figur 2: eine schematische Darstellung eines erfindungsgemäßen Absperrorgans;
- Figur 3: eine dreidimensionale Draufsicht auf eine weitere Ausführungsform eines erfindungsgemäßen Absperrorgans;
- Figur 4: eine Schnittdarstellung durch das Absperrorgan aus der Figur 3;
- Figur 5: eine Schnittdarstellung durch den Abdichtungsbereich des Absperrorgans aus den Figuren 3 und 4.

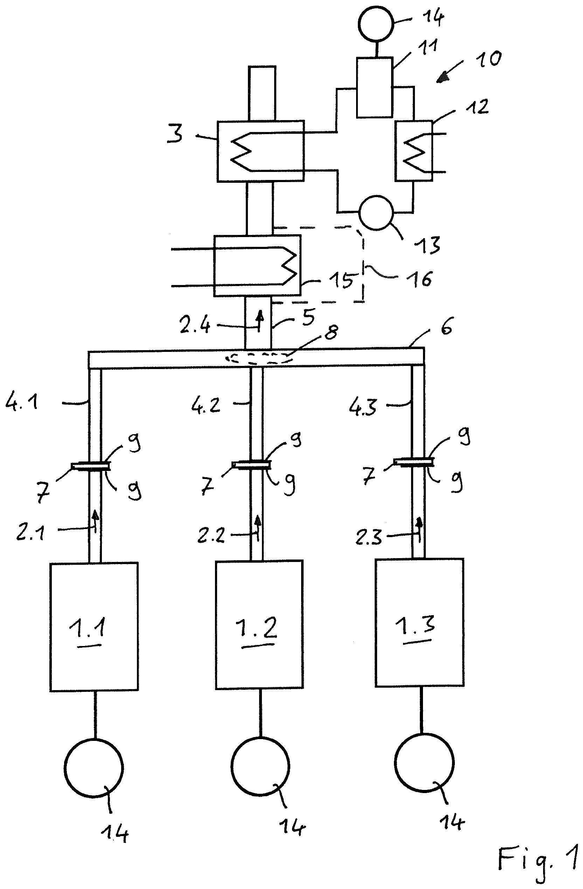

In der Figur 1 ist eine schematische Darstellung eines erfindungsgemäß ausgeführten Blockheizkraftwerks gezeigt, das die Verbrennungsmotoren 1.1, 1.2, 1.3 umfasst. Bei den Verbrennungsmotoren 1.1, 1.2, 1.3 handelt es sich beispielsweise um Gasmotoren, die insbesondere mit Biogas oder einem anderen Gas betrieben werden, um Antriebsleistung zu erzeugen, mit welcher ein oder mehrere elektrische Generatoren angetrieben werden. Im gezeigten Ausführungsbeispiel treibt jeder Verbrennungsmotor 1.1, 1.2, 1.3 einen eigenen elektrischen Generator 14 an.

Die Verbrennungsmotoren 1.1, 1.2, 1.3 erzeugen jeweils einen Abgasstrom 2.1, 2.2, 2.3, wobei die einzelnen Abgasströme 2.1, 2.2, 2.3 zu einem gemeinsamen Abgasstrom 2.4 vereint werden. Die einzelnen Abgasströme 2.1, 2.2, 2.3 werden jeweils in einer separaten Abgasleitung 4.1, 4.2, 4.3 geführt, wobei die separaten Abgasleitungen 4.1, 4.2, 4.3 in einem Abgassammler 6 münden, in dem die einzelnen Abgasströme 2.1, 2.2, 2.3 vereint werden. An den Abgassammler 6 schließt sich eine gemeinsame Abgasleitung 5 an, die den gemeinsamen Abgasstrom 2.4 führt.

In der gemeinsamen Abgasleitung 5 ist ein Abgaswärmetauscher 3 angeordnet, der Wärme aus dem gemeinsamen Abgasstrom 2.4 in einen Dampfkreislauf 10 überträgt. Mit dem Abgaswärmetauscher 3 wird ein Arbeitsmedium des Dampfkreislaufes 10, insbesondere Wasser oder ein Wassergemisch, verdampft. Das verdampfte Arbeitsmedium wird einem Dampfmotor 11 zugeführt, in welchem das Arbeitsmedium unter Erzeugung mechanischer Energie expandiert, bevor es in einen dem Dampfmotor 11 nachgeschalteten Kondensator 12 im Dampfkreislauf 10 eintritt und dort kondensiert wird. Das im Kondensator 12 verflüssigte Arbeitsmedium wird mit der dem Kondensator 12 nachgeschalteten Speisepumpe im Dampfkreislauf 10 zurück zum Abgaswärmetauscher 3 gepumpt und dort verdampft.

Alternativ könnten zusätzlich zum dem Abgaswärmetauscher 3 in der gemeinsamen Abgasleitung 5 oder alternativ zu dem Abgaswärmetauscher 3 in der gemeinsamen Abgasleitung 5 separate Abgaswärmetauscher 3 in den separaten Abgasleitungen 4.1, 4.2, 4.3 vorgesehen sein, die Wärme aus den einzelnen Abgasströmen 2.1, 2.2, 2.3 in einen gemeinsamen oder separate Dampfkreisläufe 10 übertragen.

Der Dampfmotor 11 treibt mit der in ihm erzeugten Antriebsenergie ebenfalls einen elektrischen Generator 14 an, um beispielsweise ein nicht näher dargestelltes Stromnetz zusammen mit den anderen elektrischen Generatoren 14 zu speisen.

In der gemeinsamen Abgasleitung 5 ist ferner ein Abgasnutzwärmetauscher 15 vorgesehen, um dem gemeinsamen Abgasstrom 2.4 Wärme zu entziehen und als Nutzwärme zur Verfügung zu stellen. Der Abgasnutzwärmetauscher 15 ist in Strömungsrichtung des Abgases vor dem Abgaswärmetauscher 3 angeordnet, könnten jedoch prinzipiell auch dahinter vorgesehen sein. Auch ist es möglich, weitere Abgaswärmetauscher vorzusehen. Bevorzugt ist bei der gezeigten Anordnung ein Bypass 16 um den Abgasnutzwärmetauscher 15 vorgesehen, mit welchem der gemeinsame Abgasstrom 2.4 am Abgasnutzwärmetauscher 15 vorbei zum Abgaswärmetauscher 3 geleitet werden kann, um für den Abgaswärmetauscher 3 und damit den Dampfkreislauf 10 die maximale Abgaswärmemenge zur Verfügung zu stellen.

Die Verbrennungsmotoren 1.1, 1.2, 1.3 sind einzeln abschaltbar und zuschaltbar, um das Blockheizkraftwerk flexibel betreiben zu können und die insgesamt erzeugte elektrische Leistung anpassen zu können. Dabei kann jeder der Verbrennungsmotoren 1.1, 1.2 und 1.3 vorteilhaft zwischen zwei Betriebszuständen wechselseitig geschaltet werden, nämlich zwischen einem Nennbetriebszustand und dem ausgeschalteten Zustand, wobei im Nennbetriebszustand ein Wirkungsgrad des Verbrennungsmotors 1.1, 1.2, 1.3 maximal ist.

Um zu verhindern, dass heißes Abgas aus einer der separaten Abgasleitungen 4.1, 4.2, 4.3 oder der gemeinsamen Abgasleitung 5 in eine kalte separate Abgasleitung 4.1, 4.2, 4.3 eines nicht eingeschalteten Verbrennungsmotors 1.1, 1.2, 1.3 strömt oder zumindest nicht bis zu dem entsprechenden kalten Verbrennungsmotor 1.1, 1.2, 1.3 strömt, ist in jeder separaten Abgasleitung 4.1, 4.2, 4.3 ein Absperrorgan 7 angeordnet, welches im geschlossenen Zustand eine Rückströmung von heißem Abgas zu dem kalten Verbrennungsmotor 1.1, 1.2, 1.3 verhindert. Bevorzugt sind die Absperrorgane 7 vergleichsweise dicht am Abgassammler 6 positioniert, um eine Kondensation von heißem Abgas in einem abgekühlten Teilstück der separaten Abgasleitungen 4.1, 4.2, 4.3 zu vermeiden.

Zusätzlich oder alternativ kann, wie durch die gestrichelte Linie angedeutet ist, im Abgassammler 6 ein Umschaltventil 8 vorgesehen sein, mit welchem eine abgasleitende Verbindung zu den separaten Abgasleitungen 4.1, 4.2, 4.3 einzeln gasdicht absperrbar ist.

Bei der Ausgestaltung mit den Absperrorganen 7 sind diese bevorzugt jeweils zwischen zwei Rohrleitungsflanschen 9 in den separaten Abgasleitungen 4.1, 4.2, 4.3 angeordnet. Damit wird eine besonders leichte Nachrüstbarkeit bestehender Anlagen erreicht, da entsprechende Rohrleitungsflansche 9 in der Regel bereits existieren. Entsprechende Rohrleitungsflansche 9 könnten auch in einem Anschluss der separaten Abgasleitungen 4.1, 4.2, 4.3 am Abgassammler 6 vorgesehen sein, sodass die Absperrorgane 7 entsprechend unmittelbar vor dem Abgassammler 6 angeordnet werden können.

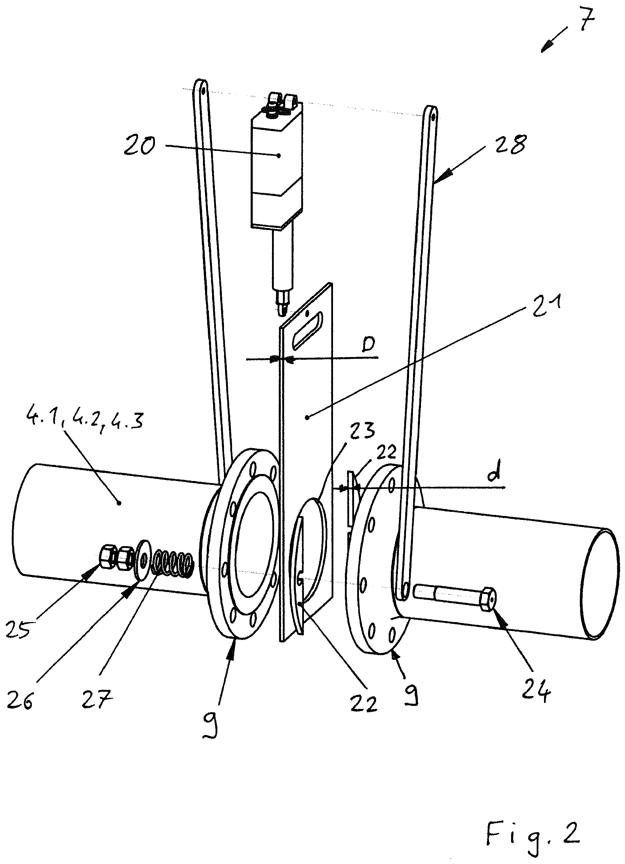

Eine besonders vorteilhafte Ausgestaltung eines entsprechenden Absperrorgans 7 ist in der Figur 2 gezeigt. Das Absperrorgan 7 weist einen Antrieb 20, beispielsweise in Form eines Linearmotors, auf. Am Antrieb 20 ist ein reziprok zwischen einer Schließstellung und einer Öffnungsstellung bewegbarer Schieber 21 angeschlossen. In der Figur 2 ist der Schieber 21 in der Öffnungsstellung gezeigt, in welcher eine Durchgangsöffnung 23 im Schieber 21 mit einem Rohrleitungsquerschnitt der beiden sich anschließenden Rohrleitungsflansche 9 fluchtet.

Beidseitig neben dem Schieber 21, der beispielsweise aus Blech hergestellt ist, sind Abstandshalter 22 angeordnet, die den Schieber 21 bei seiner reziproken Bewegung zwischen der Schließstellung und der Öffnungsstellung seitlich führen. Die beiden Abstandhalter 22 sind zusammen mit dem Schieber 21 gasdicht zwischen den beiden Rohrleitungsflanschen 9 der separaten Abgasleitungen 4.1, 4.2, 4.3 eingespannt.

Das gasdichte Einspannen kann allein durch eine metallische Dichtung erreicht werden. Alternativ sind Dichtelemente vorgesehen, beispielsweise aus Graphit. Wenn Dichtelemente vorgesehen sind, können diese durch eine elastisch oder plastisch verformbare Dichtschicht auf einer oder beiden flächigen Oberflächen des Schiebers 21 und/oder der Abstandshalter 22 geformt werden. Separate Dichtelemente sind jedoch auch möglich.

Die Abstandshalter 22 weisen vorteilhaft eine Dicke d auf, welche etwas kleiner als die Dicke D des Schiebers 21 ist. Damit kann besonders leicht eine Abdichtung zwischen den beiden Rohrleitungsflanschen 9 und dem Schieber 21 erreicht werden. Wenn eine Dichtschicht vorgesehen ist, so geht diese in die Dickenberechnung ein.

Die Abstandhalter 22 können, wie dargestellt, wenigstens eine Bohrung oder sonstige Durchgangsöffnung aufweisen, durch die die Schrauben 24 einer Flanschverschraubung geführt sind, um einen formschlüssigen Halt zu erzielen. Die Durchgangsöffnungen können randseitig offen sein, sodass die Schrauben 24 zugleich den Schieber 21 seitlich führen. Dies ist jedoch nicht zwingend.

Die Flanschverschraubung weist neben den Schrauben 24 bevorzugt Muttern 25, gegebenenfalls eine Unterlegscheibe 26 und besonders bevorzugt eine Druckfeder 27 oder ein sonstiges elastisches Druckelement auf, um einen fest vorgegebenen federvorgespannten Anpressdruck zwischen den Rohrleitungsflanschen 9 und dem Absperrorgan 7 beziehungsweise dem Schieber 21 und den Abstandshaltern 22 zu erreichen, um eine sichere und exakt einstellbare Gängigkeit des Schiebers 21 zu erzielen.

Im gezeigten Ausführungsbeispiel wird der Antrieb 20 durch zwei Halter 28, die stabförmig sind, durch die Rohrleitungsflanschen 9 getragen. Die Halter 28 sind über die Flanschverschraubung an den Rohrleitungsflanschen 9 verschraubt. Der Antrieb 20 kann dann leicht mit seinem Aktuator an einem Ende des Schiebers 21 angeschlossen werden. Somit wird ein äußerst einfacher konstruktiver Aufbau und eine leichte Montage und Nachrüstung des Absperrorgans 7 an den separaten Abgasleitungen 4.1, 4.2, 4.3 ermöglicht.

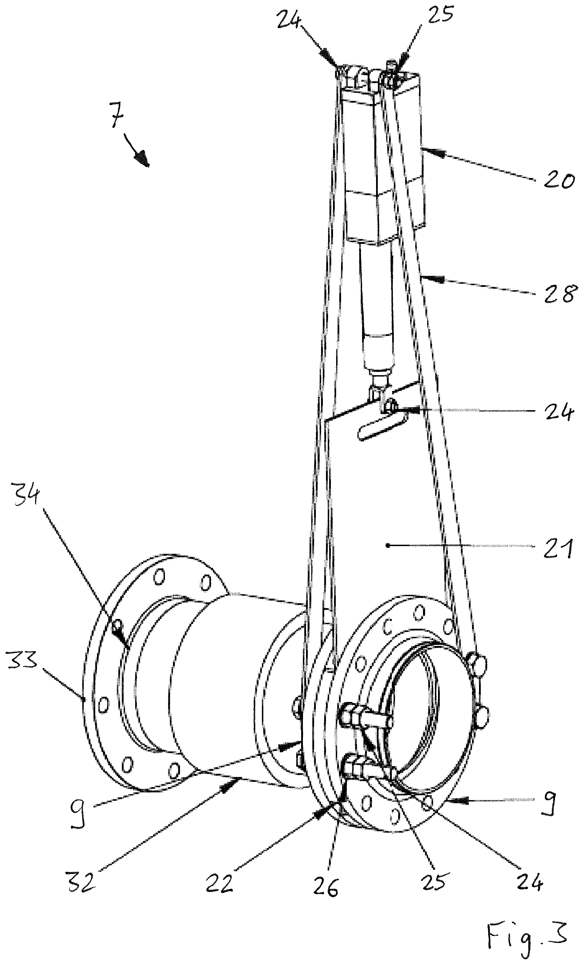

In den Figuren 3 bis 5 ist eine weitere Ausführungsform eines Absperrorgans 7 gezeigt. Hinsichtlich des Antriebs 20 und den Haltern 28 gilt das zu der Figur 2 Ausgeführte. Auch weitere sich entsprechende Bauteile sind mit denselben Bezugszeichen gekennzeichnet.

Im Einzelnen gezeigt sind diesmal auch die Schrauben 24 und Muttern 25, mit welchen der Antrieb 20 an den Haltern 28 und am Schieber 21 angeschlossen ist.

Abweichend von der Ausführungsform gemäß der Figur 2 sind die beiden Rohrleitungsflansche 9, welche den Schieber 21 und die Abstandshalter 22 in der Axialrichtung zwischen sich einschließen, fest gegeneinander verschraubt. Es ist keine Druckfeder 27 in der Verschraubung vorgesehen, sondern mittels den Schrauben 24, gegebenenfalls der Unterlegscheibe 26, und den Muttern 25 wird eine fest angezogene Verbindung hergestellt. Um dennoch ein Verklemmen des Schiebers 21 zwischen den beiden Rohrleitungsflanschen 9 zu vermeiden, ist ein Axialabstand zwischen dem Schieber 21 und den beiden Rohrleitungsflanschen 9 vorgesehen, der mit einem elastischen und/oder elastisch gelagerten Dichtelement 29 überbrückt wird.

In der gezeigten Ausführungsform ist das Dichtelement 29 als Dichtring ausgeführt, der bevorzugt über seinem Umfang geschlossen ist, und der aus einem elastischen Material hergestellt ist und/oder bevorzugt elastisch vorgespannt an dem ihm zugeordneten Rohrleitungsflansch 9 gelagert ist. Gemäß einer Ausführungsform ist nur ein einziger der beiden Rohrleitungsflansche 9 mit dem entsprechenden Dichtelement 29 versehen und der andere Rohrleitungsflansch 9 liegt unmittelbar abdichtend am Schieber 21 an. Gemäß einer alternativen Ausführungsform sind beide Rohrleitungsflansche 9 mit einem entsprechenden Dichtelement 29 versehen.

Bevorzugt ist das Dichtelement 29 als Metallteil ausgeführt, beispielsweise als Rotgussring, das/der in einer Aussparung des Rohrleitungsflansches 9 eingesetzt ist und aus dieser stirnseitig in Richtung des Schiebers 21 herausragt.

In der gezeigten Ausführungsform wird das Dichtelement 29 durch ein oder mehrere Federelemente 30, insbesondere in Form von Druckfedern oder Tellerfedern, elastisch gegen den Schieber 21 gedrückt. Beispielsweise wird das Dichtelement 29 auf Stiften, insbesondere Zylinderstiften 31, gehalten, wobei die Zylinderstifte 31 zugleich die Federelemente 30 tragen können.

Die Ausführungsform gemäß den Figuren 3 bis 5 ermöglicht ein reibungsarmes Verschieben des Schiebers 21 und stellt zugleich eine sichere Abdichtung zwischen den beiden Rohrleitungsflanschen 9 sicher. Ferner wird ein ungewollter Versatz zwischen den beiden Rohrleitungsflanschen 9 vermieden, der anderenfalls durch Montagespiele und/oder Temperaturdehnungen auftreten kann.

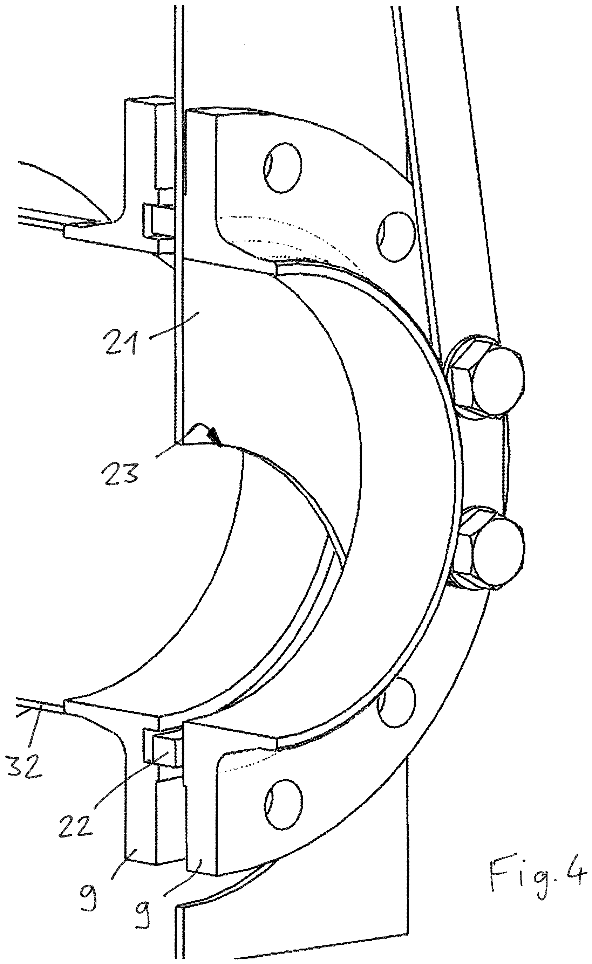

In den Figuren 3 und 4 ist ferner angedeutet, dass wenigstens einer der beiden Rohrleitungsflansche 9 oder beide Rohrleitungsflansche 9, welche den Schieber 21 und die Abstandshalter 22 unmittelbar zwischen sich einschließen, nicht unmittelbar an der mit dem Absperrorgan 7 auszurüstenden Gasleitung angeschlossen sind, sondern über einen Kompensator 32, der eingerichtet ist einen axialen und/oder radialen Versatz zwischen den Abgasleitungen, zwischen welchen das Absperrorgan 7 eingebaut wird, auszugleichen. Beispielsweise ist der Kompensator 32 ein verformbares Rohrstück. Wie aus der Figur 4 ersichtlich ist, kann ein solcher Kompensator 32 eine dünnere Wandstärke aufweisen als die sich anschließende Wandstärke eines Rohrstutzens, welcher den Rohrleitungsflansch 9 ausbildet. Entsprechend kann der Kompensator 32 auch eine dünnere Wandstärke als die sich anschließenden Abgasleitungen aufweisen.

Von den beiden Rohrleitungsflanschen 9 aus gesehen, welche den Schieber 21 und die Abstandshalter 22 zwischen sich einschließen, ist jenseitig des Kompensators 32 ein weiterer Rohrleitungsflansch 33 vorgesehen, der an die entsprechende hier nicht dargestellte Abgasleitung angeschlossen wird. Der Rohrleitungsflansch 33 kann zum Beispiel, jedoch nicht zwingend, als Losflansch ausgeführt sein, der ein Rohrstück mit einer radialen Erweiterung oder Umbördelung am axialen Ende umschließt. Ein solcher Flansch wird auch als Bördelflansch bezeichnet.

Gemäß einer Ausführungsform handelt es sich bei dem ganz rechts in der Figur 3 dargestellten Rohrleitungsflansch 9 analog zu der Darstellung in der Figur 2 um einen Rohrleitungsflansch 9 einer bestehenden Abgasleitung. Alternativ kann auch auf dieser Seite ein Kompensator 32 entsprechend der linken Seite in der Figur 3 vorgesehen sein, der über einen entsprechenden Rohrleitungsflansch 33 am Rohrleitungsflansch der bestehenden Abgasleitung angeschlossen ist.

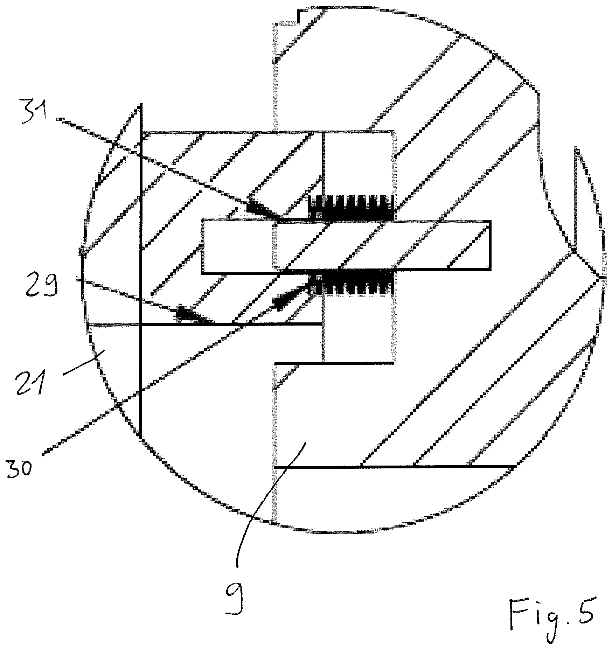

Neben dem in den Figuren 4 und 5 dargestellten Dichtelement 29 können weitere Dichtelemente zwischen den beiden Rohrleitungsflanschen 9 vorgesehen sein. Beispielsweise kann ein temperaturfestes Dichtband seitlich am Dichtelement 29 angebracht sein, um eine zusätzliche Abdichtung zu erreichen.

Im Übrigen wird hinsichtlich der Funktion des Absperrorgans in den Figuren 3 bis 5 auf die Beschreibung der Figuren 1 und 2 verwiesen.

Die in den Figuren 3 bis 5 gezeigte Ausführungsform mit fest aneinander verspannten Rohrleitungsflanschen 9 und wenigstens einem Dichtelement 29 zwischen einem Rohrleitungsflansch 9 und dem Schieber 21, wobei dann zwischen dem anderen Rohrleitungsflansch 9 und dem Schieber 21 eine direkte metallische Dichtung zwischen dem Rohrleitungsflansch 9 und dem Schieber 21 vorgesehen sein kann, oder mit entsprechend wenigstens einem Dichtelement 29 auf jeder Seite des Schieber 21, kann auch entsprechend der Ausführungsform in der Figur 2 mit bestehenden Rohrleitungsflanschen 9 ausgeführt werden, wobei dann entsprechend ein Rohrleitungsflansch 9 oder beide Rohrleitungsflansche 9 mit einem entsprechenden Dichtelement 29 versehen werden. In diesem Fall würden die Abstandshalter 22 bevorzugt eine Dicke d aufweisen, die größer als die Dicke D des Schiebers 21 ist.

### Bezugszeichenliste

- 1.1: Verbrennungsmotor
- 1.2: Verbrennungsmotor
- 1.3: Verbrennungsmotor
- 2.1: Abgasstrom
- 2.2: Abgasstrom
- 2.3: Abgasstrom
- 2.4: gemeinsamer Abgasstrom
- 3: Abgaswärmetauscher
- 4.1: separate Abgasleitung
- 4.2: separate Abgasleitung
- 4.3: separate Abgasleitung
- 5: gemeinsame Abgasleitung
- 6: Abgassammler
- 7: Absperrorgan
- 8: Umschaltventil
- 9: Rohrleitungsflansch
- 10: Dampfkreislauf
- 11: Dampfmotor
- 12: Kondensator
- 13: Speisepumpe
- 14: elektrischer Generator
- 15: Abgasnutzwärmetauscher
- 16: Bypass
- 20: Antrieb
- 21: Schieber
- 22: Abstandshalter
- 23: Durchgangsöffnung
- 24: Schraube
- 25: Mutter
- 26: Unterlegscheibe
- 27: Druckfeder
- 28: Halter
- 29: Dichtelement
- 30: Federelement
- 31: Zylinderstift
- 32: Kompensator
- 33: Rohrleitungsflansch
- 34: Rohrstück
- d: Dicke
- D: Dicke

## Patentansprüche

1. Blockheizkraftwerk mit einer Vielzahl von Verbrennungsmotoren (1.1, 1.2, 1.3), die jeweils einen Abgasstrom (2.1, 2.2, 2.3) erzeugen;
mit wenigstens einem Abgaswärmetauscher (3), der mit den Abgasströmen (2.1, 2.2, 2.3) der Verbrennungsmotoren (1.1, 1.2, 1.3) beaufschlagt ist, um Wärmeenergie aus den Abgasströmen (2.1, 2.2, 2.3) abzuführen, wobei die Abgasströme (2.1, 2.2, 2.3) in Strömungsrichtung des Abgases von den Verbrennungsmotoren (1.1, 1.2, 1.3) durch separate Abgaswärmetauscher (3) und/oder zu einem gemeinsamen Abgaswärmetauscher (3) zunächst in separaten Abgasleitungen (4.1, 4.2, 4.3) und anschließend in einer gemeinsamen Abgasleitung (5) geführt werden und zwischen den separaten Abgasleitungen (4.1, 4.2, 4.3) und der gemeinsamen Abgasleitung (5) ein Abgassammler (6) vorgesehen ist;
**dadurch gekennzeichnet, dass**
in den separaten Abgasleitungen (4.1, 4.2, 4.3) jeweils ein gasdichtes, separat betätigbares Absperrorgan (7) angeordnet ist; wobei das Blockheizkraftwerk ferner einen geschlossenen Dampfkreislauf (10) umfasst, in welchem der wenigstens eine Abgaswärmetauscher (3) als Verdampfer zusammen mit einem Dampfmotor (11), einem Kondensator (12) und einer Speisepumpe (13) angeordnet ist, um die aus den Abgasströmen (2.1, 2.2, 2.3) abgeführte Wärmeenergie in Antriebsleistung umzuwandeln.

2. Blockheizkraftwerk mit einer Vielzahl von Verbrennungsmotoren (1.1, 1.2, 1.3), die jeweils einen Abgasstrom (2.1, 2.2, 2.3) erzeugen;
mit wenigstens einem Abgaswärmetauscher (3), der mit den Abgasströmen (2.1, 2.2, 2.3) der Verbrennungsmotoren (1.1, 1.2, 1.3) beaufschlagt ist, um Wärmeenergie aus den Abgasströmen (2.1, 2.2, 2.3) abzuführen, wobei die Abgasströme (2.1, 2.2, 2.3) in Strömungsrichtung des Abgases von den Verbrennungsmotoren (1.1, 1.2, 1.3) durch separate Abgaswärmetauscher (3) und/oder zu einem gemeinsamen Abgaswärmetauscher (3) zunächst in separaten Abgasleitungen (4.1, 4.2, 4.3) und anschließend in einer gemeinsamen Abgasleitung (5) geführt werden und zwischen den separaten Abgasleitungen (4.1, 4.2, 4.3) und der gemeinsamen Abgasleitung (5) ein Abgassammler (6) vorgesehen ist;
**dadurch gekennzeichnet, dass**
im Abgassammler (6) ein Umschaltventil (8) vorgesehen ist, mit welchem eine abgasleitende Verbindung zu den separaten Abgasleitungen (4.1, 4.2, 4.3) einzeln gasdicht absperrbar ist.

3. Blockheizkraftwerk gemäß Ansprch 2, ferner umfassend einen geschlossenen Dampfkreislauf (10), in welchem der wenigstens eine Abgaswärmetauscher (3) als Verdampfer zusammen mit einem Dampfmotor (11), einem Kondensator (12) und einer Speisepumpe (13) angeordnet ist, um die aus den Abgasströmen (2.1, 2.2, 2.3) abgeführte Wärmeenergie in Antriebsleistung umzuwandeln.

4. Blockheizkraftwerk gemäß Anspruch 1 oder Anspruch 3, **dadurch gekennzeichnet, dass** der Dampfmotor (11) einen elektrischen Generator (14) antreibt.

5. Blockheizkraftwerk gemäß einem der Ansprüche 1, 3 oder 4, **dadurch gekennzeichnet, dass** der Dampfkreislauf (10) der einzige Dampfkreislauf (10) ist.

6. Blockheizkraftwerk gemäß einem der Ansprüche 1 bis 5, **dadurch gekennzeichnet, dass** der Abgassammler (6) außerhalb des Abgaswärmetauschers (3) angeordnet ist.

7. Blockheizkraftwerk gemäß Anspruch 1 oder gemäß einem der Ansprüche 4 bis 6, wenn diese auf Anspruch 1 zurückbezogen sind, **dadurch gekennzeichnet, dass** die Absperrorgane (7) in Strömungsrichtung des Abgases von den Verbrennungsmotoren (1.1, 1.2, 1.3) zu dem Abgassammler (6) in einem letzten Drittel, insbesondere in einem letzten Fünftel der separaten Abgasleitungen (4.1, 4.2, 4.3), insbesondere unmittelbar vor dem Abgassammler (6) angeordnet sind.

8. Absperrorgan (7) für ein Blockheizkraftwerk gemäß Anspruch 1 oder gemäß einem der Ansprüche 4 bis 7, wenn diese auf Anspruch 1 rückbezogen sind;
mit einem manuellen oder automatisierten Antrieb (20);
mit einem vom Antrieb (20) reziprok zwischen einer Schließstellung und einer Öffnungsstellung bewegbaren Schieber (21);
**gekennzeichnet durch**
zwei einteilige oder mehrteilige Abstandshalter (22), die den Schieber (21) in einer Richtung senkrecht oder schräg zur Durchströmungsrichtung des Absperrorgans zwischen sich einschließen und in seiner Bewegung führen, wobei
der Schieber (21) zusammen mit den Abstandshaltern (22) gasdicht zwischen zwei Rohrleitungsflanschen (9) einsetzbar ist.

9. Absperrorgan (7) gemäß Anspruch 8, **dadurch gekennzeichnet, dass** der Schieber (21) eine Durchgangsöffnung (23) aufweist, die in der Öffnungsstellung mit einem Strömungsquerschnitt der Rohrleitungsflansche (9) in Überdeckung bringbar ist.

10. Absperrorgan (7) gemäß einem der Ansprüche 8 oder 9, **dadurch gekennzeichnet, dass** die Abstandshalter (22) eine Dicke (d) aufweisen, welche größer als eine Dicke (D) des Schiebers (21) ist, wobei der Schieber (21) gegenüber einem der beiden Rohrleitungsflansche (9) oder gegenüber beiden Rohrleitungsflanschen (9) mit einem elastischen und/oder elastisch am jeweiligen Rohrleitungsflansch (9) gelagerten Dichtelement (29) gegen den Rohrleitungsflansch (9) gasdicht abgedichtet ist.

11. Absperrorgan (7) gemäß einem der Ansprüche 8 bis 10, **dadurch gekennzeichnet, dass** der Schieber (21) und/oder die Abstandshalter (22) auf einer Oberfläche oder zwei entgegengesetzten Oberflächen eine elastisch oder plastisch verformbare Dichtschicht aufweisen.

12. Absperrorgan (7) gemäß einem der Ansprüche 8 bis 10, **dadurch gekennzeichnet, dass** die Schieber (21) und/oder die Abstandshalter (22) eine metallische Dichtung ausbilden.

13. Absperrorgan (7) gemäß einem der Ansprüche 8 bis 12, **dadurch gekennzeichnet, dass** wenigstens ein Halter (28) vorgesehen ist, mit welchem der Antrieb (20) an den Rohrleitungsflanschen (9) anschließbar, insbesondere verschraubbar, ist.

14. Blockheizkraftwerk gemäß Anspruch 1 oder gemäß einem der Ansprüche 4 bis 7, wenn diese auf den Anspruch 1 rückbezogen sind, und mit einer Vielzahl von Absperrorganen (7) gemäß einem der Ansprüche 8 bis 13.

15. Blockheizkraftwerk gemäß Anspruch 14, **dadurch gekennzeichnet, dass** die Antriebe (20) zusammen mit den Schiebern (21) an den Rohrleitungsflanschen (9) montiert sind.
